# EUROPEAN PATENT APPLICATION

(11) **EP 4 290 743 A1**
(43) Date of publication of application: **13.12.2023**
(21) Application number: 22749938.1
(22) Date of filing: 26.01.2022
(51) Int. Cl.: H02K 5/02, H02K 7/00, H02K 5/04, H02K 1/12, H02K 1/22, F16C 3/02

(54) **CARBON COMPOSITE MATERIAL SHAFT AND CARBON COMPOSITE MATERIAL MOTOR SPINDLE COMPRISING SAME**

(30) Priority: 04.02.2021 KR 20210016094; 08.03.2021 KR 20210029818
(71) Applicant: Kim, Kang Gyu, Seoul 08589 (KR)
(72) Inventor: KIM, Sang Yeon, Seoul 08845 (KR); KIM, Kang Gyu, Seoul 08589 (KR)
(74) Representative: Morabito, Sara
(86) International application number: PCT/KR2022/001400
(87) International publication number: WO 2022/169187

(57) **Abstract**

The present invention relates to: a carbon composite material shaft in which a reinforcing bar made of a carbon composite material constitutes the inside of a space part of a shaft main body made of a metal material; and a carbon composite material motor spindle, in which a support pipe of a housing consists of an inner cylinder body made of a metal material and an outer cylinder body made of a carbon composite material, comprising a carbon composite material shaft. While the weight of the shaft and the housing can be reduced, the strength of the shaft and the housing can be increased, and the thermal variation characteristics of the shaft and the housing can be improved.

## Description

### Field of the invention

This invention relates to a carbon composite material shaft having a new structure with improved thermal variation characteristics while reducing weight, and a carbon composite material motor spindle including the same.

### Background of the invention

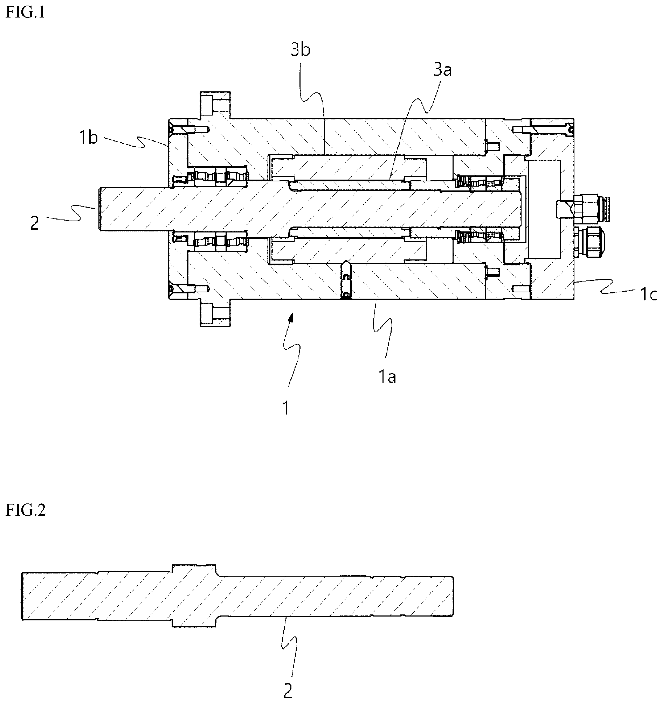

In general, as shown in FIG. 1, a motor spindle used in machine tools or the like is composed of a housing 1, a shaft 2 which is provided rotatably inside the housing 1, and one end of which extends to the outside of the housing 1, and a rotor 3a and a stator 3b which are provided on the outer circumferential surface of the shaft 2 and the inner circumferential surface of the housing 1, and thus the shaft 2 is rotated when power is applied.

The housing 1 is composed of a support cylinder part 1a extending in the front and rear direction, and front cover members 1b and rear cover members 1c coupled to the front and rear ends of the support cylinder part 1a, respectively, and the support cylinder part 1a and the front cover members 1b and rear cover members 1c are made of a high-strength metal material.

In addition, a through hole penetrating the front and rear surfaces is formed in the central portion of the front cover member 1b.

In addition, as shown in FIG. 2, the shaft 2 is composed of a round rod shape of a metal material with high strength extending in the front and rear direction, an enlarged diameter portion is formed in the central portion, and coupling portions are formed at both of the front and rear ends so that it is rotatably coupled to the inside of the housing 1, and the front end portion extends forward of the housing 1 through the through hole of the front cover member 1b.

In addition, the shaft 2 is made of a metal material having high strength and is configured to ensure sufficient strength.

However, since the shaft 2 and the housing 1 of the motor spindle including the shaft 2 and the entire of the shaft 2 are made of a metal material, there have been problems in that they are not only heavy, but also have a large expansion rate due to temperature change.

Therefore, there is a need for a new method capable of solving these problems.

### [Prior Art Document]

### [Patent Document]

Korean Patent No. 10-0428375

### SUMMARY OF THE INVENTION

This invention is to solve the above problems, and an object of this invention is to provide a carbon composite material shaft having a new structure with improved thermal variation characteristics while reducing weight, and a carbon composite material motor spindle including the same.

In order to achieve the above object, a carbon composite material shaft according to this invention is characterized in that it includes a shaft main body 21 composed of a rod shape made of a metal material and having a space part 21a formed therein and a reinforcing bar 22 made of a carbon composite material inserted and fixed into the space part 21a of the shaft main body 21, wherein the reinforcing bar 22 is fixed to the inside of the space part 21a by the adhesive.

Further, in the carbon composite material shaft 20 according to this invention, the reinforcing bar 22 is configured by winding a carbon fiber 22b around the circumferential surface of a shaft member 22a made of a carbon material.

Further, in the carbon composite material shaft 20 according to this invention,
the shaft member 22a made of a carbon material of the reinforcing bar 22 is a sealed core material or a core material in which a hollow is formed in the longitudinal direction of the shaft.

Further, in the carbon composite material shaft 20 according to this invention,
an insulating material 22d may be further provided on the contact surface between the reinforcing bar 22 and the shaft main body 21, and the insulating material 22d may be separately provided on the inner circumferential surface of the space part 21a of the shaft main body 21 or formed by applying an insulating material to the inner circumferential surface of the space part 21a of the shaft main body 21, or may be separately provided on the outer circumferential surface of the reinforcing bar 22 or formed by coating an insulating material on the carbon fiber 22b wound around the shaft member 22a of the reinforcing bar 22, or may be formed by alternately stacking the carbon fiber 22b and the insulating material wound around the shaft member 22a of the reinforcing bar 22.

Further, in the carbon composite material shaft 20 according to this invention,
the space part 21a formed in the shaft main body 21 is configured so that the front end portion thereof is closed and the rear end portion thereof is open, a communication hole 21b connected to the space part 21a is formed in the central portion of the front end portion of the shaft main body 21, and a cap 23 coupled to the rear end portion of the space part 21a is further included.

Further, in the carbon composite material shaft 20 according to this invention,
the space part 21a has a ring-shaped concave groove 24 formed on the inner circumferential surface of the rear end portion thereof to correspond to the position of the rear end portion of the reinforcing bar 22 so that, when the adhesive is injected into the space part 21a, the adhesive is configured to be temporarily stored inside the concave groove 24. Here, depending on the type of adhesive used, if the reinforcing rod 22 with an adhesive applied to the outer circumferential surface and the rear end portion is inserted into the space part 21a, the adhesive applied to the rear end of the reinforcing rod 22 can be pushed and temporarily stored inside the concave groove 24.

Further, the carbon composite material shaft 20 according to this invention is characterized in that it is manufactured through the steps of inserting the reinforcing bar 22 into the space part 21a of the shaft main body 21, injecting the adhesive into the space part 21a so that the adhesive permeates the reinforcing bar 22, thereby hardening the reinforcing bar 22 and, at the same time, fixing the reinforcing bar 22 to the inside of the space part 21a, and discharging an extra adhesive to the outside of the space part 21a through the communication hole 21b, and coupling the cap 23 to the rear end portion of the space part 21a.

Furthermore, a carbon composite material motor spindle according to this invention including:
a housing 10 configured by including a support cylinder part 11 extending in the front and rear direction, and front cover members 12 and rear cover members 13 coupled to front and rear ends of the support cylinder part 11, respectively;
a carbon composite material shaft 20 which is rotatably provided inside the housing 10 and of which one end is provided to extend to the outside of the housing 10; and
a rotor 31 and a stator 32 which are provided on the outer circumferential surface of the carbon composite material shaft 20 and the inner circumferential surface of the housing 10,
wherein the support cylinder part 11 of the housing 10 is composed of an inner cylinder body 11a made of a metal material and an outer cylinder body 1 1b made of a carbon composite material coupled to the outer side of the inner cylinder body 11a,
wherein the carbon composite material shaft 20 is configured by including a shaft main body 21 made of a metal material having a space part 21a formed therein, and a reinforcing bar 22 made of a carbon composite material inserted and fixed into the space part 21a of the shaft main body 21.

Further, in the carbon composite material motor spindle according to this invention,
the outer cylinder body 11b is configured by winding a carbon fiber around the outer circumferential surface of the inner cylinder body 11a and then impregnating and curing the carbon fiber with an adhesive.

Further, in the carbon composite material motor spindle according to this invention,
the reinforcing bar 22 of the carbon composite material shaft 20 is fixed to the inside of the space part 21a by the adhesive.

Further, in the carbon composite material motor spindle according to this invention,
the reinforcing bar 22 of the carbon composite material shaft 20 is configured by winding a carbon fiber 22b around the circumferential surface of the shaft member 22a made of a carbon material.

Further, in the carbon composite material motor spindle according to this invention,
the shaft member 22a made of a carbon material of the reinforcing bar 22 of the carbon composite material shaft 20 is a sealed core material or a core material in which a hollow is formed in the longitudinal direction of the shaft.

Further, in the carbon composite material motor spindle according to this invention,
the reinforcing bar 22 and the shaft main body 21 of the carbon composite material shaft 20 may have an insulating material 22d further provided on a contact surface therebetween, and the insulating material 22d is separately provided on the inner circumferential surface of the space part 21a of the shaft main body 21, formed by applying the insulating material to the inner circumferential surface of the space part 21a of the shaft main body 21, or separately provided on the outer circumferential surface of the reinforcing bar 22, or formed by coating the insulating material on the carbon fiber 22b wound around the shaft member 22a of the reinforcing bar 22, or formed by alternately stacking the carbon fiber 22b and the insulating material wound around the shaft member 22a of the reinforcing bar 22.

Further, in the carbon composite material motor spindle according to this invention,
the space part 21a formed in the shaft main body 21 of the carbon composite material shaft 20 is configured such that the front end portion is closed and the rear end portion is open, a communication hole 21b connected to the space part 21a is formed in the central portion of the front end portion of the shaft main body 21, and a cap 23 coupled to the rear end portion of the space part 21a is further included, and
a ring-shaped concave groove 24 is formed on the inner circumferential surface of the rear end portion of the space part 21a to correspond to the position of the rear end portion of the reinforcing bar 22 so that, when the adhesive is injected into the space part 21a, the adhesive is configured to be temporarily stored inside the concave groove 24. Here, depending on the type of adhesive used, if the reinforcing rod 22 with an adhesive applied to the outer circumferential surface and the rear end portion is inserted into the space part 21a, the adhesive applied to the rear end of the reinforcing rod 22 can be pushed and temporarily stored inside the concave groove 24.

Further, in the carbon composite material motor spindle according to this invention,
the carbon composite material shaft 20 is manufactured through the steps of inserting the reinforcing bar 22 into the space part 21a of the shaft main body 21, injecting the adhesive into the space part 21a so that the adhesive permeates the reinforcing bar 22 to harden the reinforcing bar 22, and at the same time, the reinforcing bar 22 is fixed to the inside of the space part 21a, and discharging an extra adhesive to the outside of the space part 21a through the communication hole 21b, and coupling the cap 23 to the rear end portion of the space part 21a.

In the carbon composite material shaft according to this invention, a reinforcing bar made of a carbon composite material is formed inside the space part of the shaft main body made of a metal material so that a weight reduction effect of 20 to 25% or more can be obtained compared to a conventional shaft entirely made of a metal material. In addition, there is an effect of improving the strength and improving the thermal variation characteristics of the shaft.

Further, the carbon composite material shaft according to this invention has an effect of thermal variation of the shaft by configuring the carbon composite material shaft so that a hollow is formed in the shaft member of the reinforcing bar made of a carbon composite material in the axial direction and cooling water is supplied along the hollow to cool the heat generated according to the rotation of the shaft, and has the effect of preventing galvanic corrosion on the inner circumferential surface of the space part of the shaft main body by providing an insulating material to the carbon fiber wound around the inner circumferential surface of the space part of the shaft main body made of a metal material, the outer circumferential surface of the reinforcing bar made of the carbon composite material, or the shaft member.

Further, the motor spindle according to this invention is composed of the inner cylinder body made of a metal material and an outer cylinder body made of a carbon composite material for the support cylinder part of the housing in addition to the above-mentioned carbon composite material shaft, and thus has effects capable of reducing the weight of the housing, improving the strength of the housing, and improving the thermal variation characteristics of the housing.

### BRIEF DESCRIPTION OF THE DRAWINGS

FIG. 1 is a side cross-sectional view showing a conventional motor spindle.
FIG. 2 is a side cross-sectional view showing a shaft provided in the motor spindle of Figure 1.
FIG. 3 is a side cross-sectional view showing a carbon composite material motor spindle according to this invention.
FIG. 4 is a side cross-sectional view showing the support cylinder part of the carbon composite material motor spindle according to this invention.
FIG. 5 is a side cross-sectional view showing the inner cylinder body of the support cylinder part of the carbon composite material motor spindle according to this invention.
FIG. 6 is a side cross-sectional view showing a carbon composite material shaft according to this invention.
FIG. 7 is a side cross-sectional view showing an exploded state of the carbon composite material shaft according to this invention.

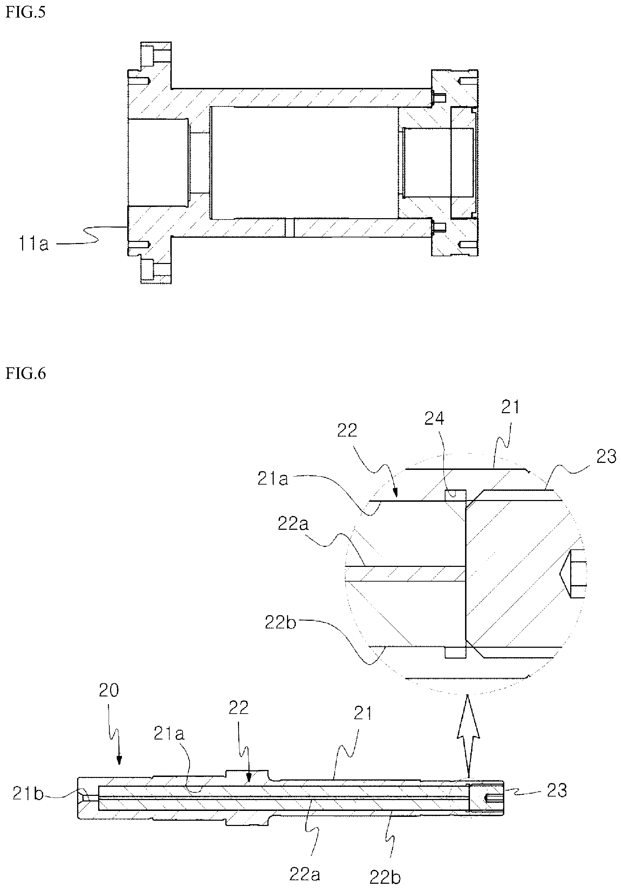

FIGS. 6 to 10 are reference views showing a method for manufacturing a carbon composite material shaft according to this invention.

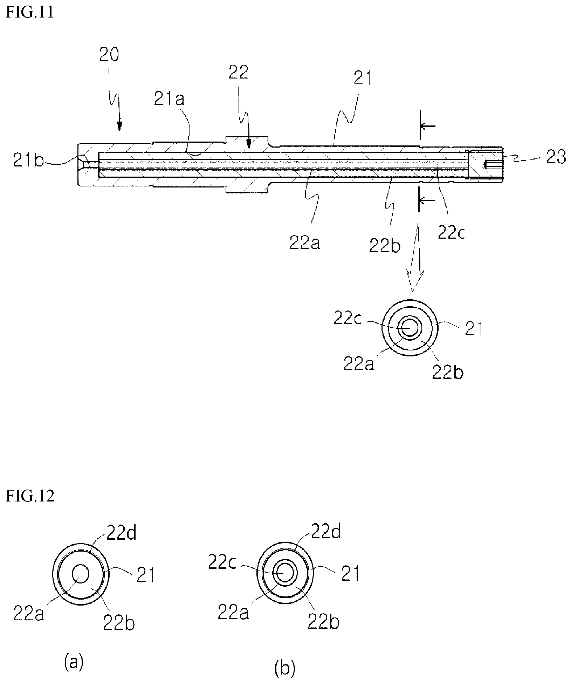

FIG. 11 is a side cross-sectional view and a front cross-sectional view showing an example in which a hollow is formed in the shaft member of the carbon composite material shaft according to this invention.
FIGS. 12A and 12B are views exemplifying that an insulating material is provided in the carbon composite material shaft according to this invention.

### DETAILED DESCRIPTION OF THE INVENTION

Hereinafter, this invention will be described in detail based on the accompanying exemplary drawings.

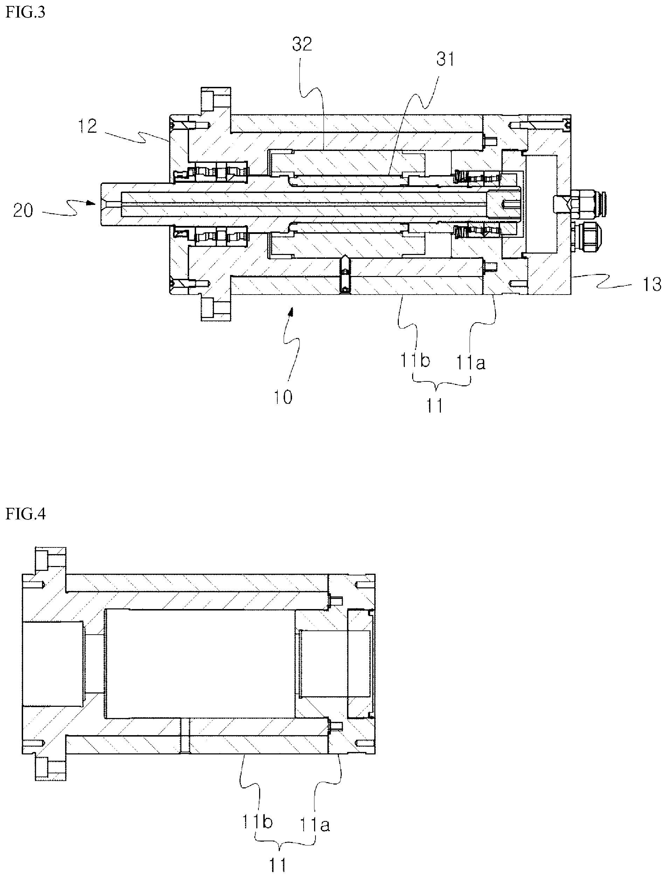

FIGS. 3 to 12 show a carbon composite material shaft according to this invention and a carbon composite material motor spindle including the same. In this invention, a carbon composite material shaft and a carbon composite material motor spindle are carbon composite hybrid materials made of metal material and carbon composite materials.

The carbon composite material motor spindle according to this invention is configured by including a housing 10, a carbon composite material shaft 20, a rotor 31, and a stator 32.

At this time, the housing 10 is composed of a support cylinder part 11 extending in the front and rear direction, and front cover members 12 and rear cover members 13 coupled to the front and rear ends of the support cylinder part 11, respectively.

In addition, according to this invention, the support cylinder part 11 is composed of an inner cylinder body 11a made of a metal material, and an outer cylinder body 11b made of a carbon composite material coupled to the outer side of the inner cylinder body 11a.

As shown in FIGS. 4 and 5, the inner cylinder body 11a is configured to have the same overall shape as the support cylinder part provided in the housing 1 of the conventional motor spindle, but a concave portion is formed on the outer circumferential surface of the middle portion.

The outer cylinder body 11b is configured by winding a carbon fiber around the concave portion, and then impregnating and curing the carbon fiber with an adhesive.

As the carbon fiber, PAN-based carbon fiber or pitch-based carbon fiber may be used, and an appropriate one may be selected depending on the properties to be imparted to the housing 10, or other various types of carbon fibers may be selected and used.

A mixture of a liquid epoxy resin and a hardening material is used as the adhesive. It is not limited to the illustrated adhesives.

Therefore, after winding the carbon fiber to a predetermined thickness around the concave portion of the inner cylinder body 11a, a liquid adhesive is applied to the carbon fiber so that the adhesive permeates the carbon fiber, and when dried for a certain period of time, the adhesive is hardened to fix the carbon fiber, and thus the outer cylinder body 11b is manufactured so that it is firmly fixed to the concave portion of the inner cylinder body 11a.

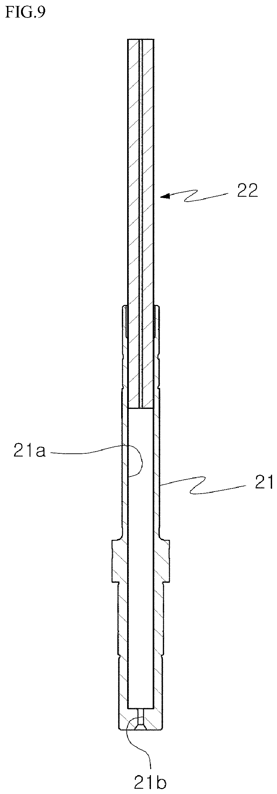

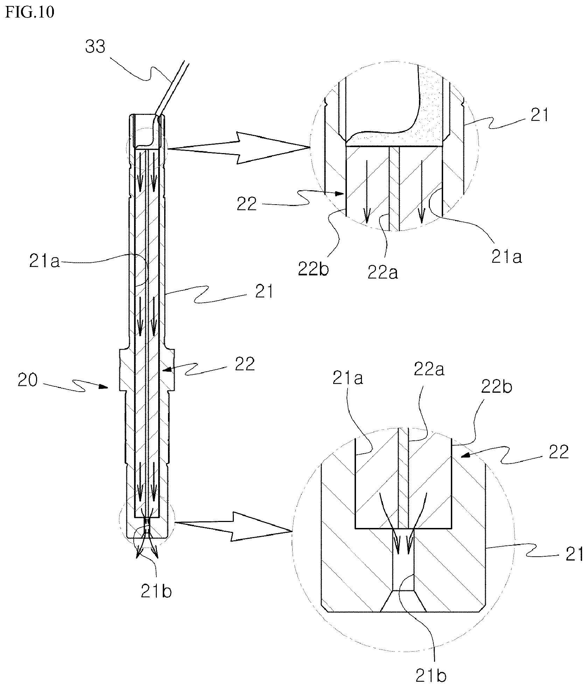

In addition, as shown in FIGS. 9 and 10, the carbon composite material shaft 20 is formed in a rod shape made of a metal material and is composed of a shaft main body 21 having a space part 21a formed therein, and a reinforcing bar 22 made of a carbon composite material inserted and fixed into the space part 21a of the shaft main body 21, and the reinforcing bar 22 is fixed to the space part 21a by the adhesive.

To explain this in detail, the shaft main body 21 has a rod shape, and a space part 21a having a closed front end portion and an opened rear end portion is formed in the longitudinal direction inside the shaft main body 21.

The space part 21a is configured in the form of a hole having a circular cross section in which inner diameters of the front and rear ends are constant.

At this time, a communication hole 21b connected to the space part 21a is formed in the central portion of the front end portion of the shaft main body 21, and a screw thread is formed at the rear end portion of the space part 21a so that a cap 23 made of a metal material may be screw-coupled thereto, or the cap 23 made of a metal material may be coupled to the rear end portion of the space part 21a in a shrinkage/cooling fitting method.

In the shrinkage/cooling fitting method, when it is inserted into the rear end portion of the space part 21a after shrinking the cap 23 made of a metal material by cooling it using liquid nitrogen, etc., it is tightly coupled to the rear end portion to seal the space part 21a as the shrunk metal material expands over time.

Although, in this invention, only screw coupling or shrinkage/cooling fitting coupling is exemplified as a method of coupling the cap to the rear end portion of the space part 21a, but it is not limited thereto, and it goes without saying that various sealing means may be applied.

The reinforcing bar 22 is configured by winding a carbon fiber 22b around a circumferential surface of a shaft member 22a made of a carbon material.

The shaft member 22a uses a carbon composite material rod or a pultrusion carbon composite material rod.

The carbon fiber 22b uses PAN-based carbon fiber or pitch-based carbon fiber.

As such a carbon fiber 22b, an appropriate one may be selected and used depending on properties to be imparted to the shaft 20 .

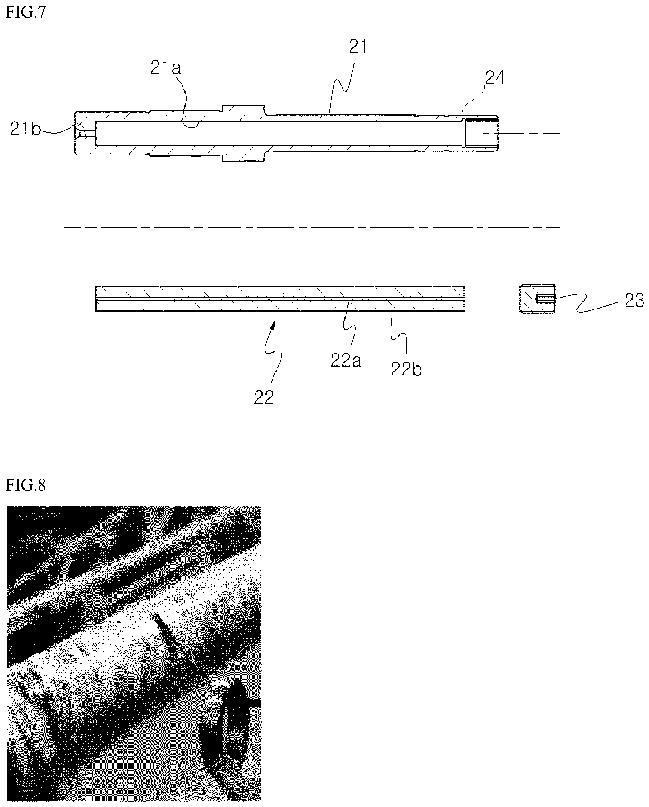

Therefore, as shown in FIG. 8, the reinforcing bar 22 may be produced by allowing the carbon fiber 22b to be wound a constant thickness on the circumferential surface of the shaft member 22a while rotating the shaft member 22a at a constant speed by fixing the shaft member 22a to a chuck or the like.

At this time, the outer diameter of the reinforcing bar 22 is adjusted to correspond to the inner diameter of the space part 21a.

In addition, the carbon fiber 22b wound around the outer circumferential surface of the reinforcing bar 22 is cured by an adhesive and simultaneously fixed to the inside of the space part 21a.

At this time, as the adhesive, a mixture of a liquid epoxy resin and a hardening material is used.

In addition, as shown in FIG. 11, the carbon composite material shaft 20 according to this invention may be made of a core material in which the shaft member 22a of the reinforcing bar 22 is sealed, or may be formed of a core material which has a certain thickness, has a hollow 22c with a predetermined diameter formed therein in the longitudinal direction of the shaft, and has an open front or rear end of the hollow.

Cooling water may be supplied to the hollow 22c of the shaft member 22a formed in this way, and it is possible to cool the heat generated according to the rotation of the shaft by cooling water in real time. According to the configuration of such a shaft, thermal variation of the shaft may be prevented, and operation efficiency is increased by preventing an increase in operation tact time of the shaft due to heat generated in the shaft operation process.

In addition, as shown in FIG. 12, the carbon composite material shaft 20 according to this invention may further include an insulating material 22d on the contact surface between the reinforcing bar 22 and the space part 21a of the shaft main body 21 made of a metal material.

In this way, the durability of the carbon composite material shaft 20 may be improved by providing the insulating material 22d on the contact surface between the reinforcing bar 22 and the shaft main body 21 and accordingly preventing galvanic corrosion from occurring on the inner circumferential surface of the space part 21a of the shaft main body 21 made of a metal material.

At this time, the insulating material 22d may be formed by a method such as separately providing it on the inner circumferential surface of the space part 21a of the shaft main body 21 made of a metal material, or applying and forming an insulating material onto the inner circumferential surface of the space part 21a of the shaft main body 21, separately providing it on the outer circumferential surface of the reinforcing bar 22 made of a carbon composite material, coating and forming an insulating material on the carbon fiber 22b wound around the shaft member 22a, or alternately stacking the carbon fiber 22b and the insulating material.

Such a method for manufacturing the carbon composite material shaft 20 will be described as follows.

First, the shaft main body 21 and the reinforcing bar 22 are manufactured.

In addition, as shown in FIG. 9, after fixing the shaft main body 21 so that the communication hole 21b faces downward, the reinforcing bar 22 is inserted into the space part 21a of the shaft main body 21.

In addition, as shown in FIG. 10, a sufficient amount of adhesive is injected into the space part 21a using the injector 33.

In this way, when the adhesive is injected into the space part 21a, the adhesive is absorbed into the carbon fiber 22b of the reinforcing bar 22 while it is flowing down so that an effect of impregnating the entire reinforcing bar 22 with the adhesive is obtained.

At this time, an extra adhesive out of the adhesive injected into the space part 21a is discharged to the outside of the space part 21a through the communication hole 21b as shown by arrows in FIG. 10.

In addition, when it is confirmed that the adhesive injected into the space part 21a is discharged through the communication hole 21b, the cap 23 is coupled to the rear end portion of the space part 21a by a screw coupling or a shrinkage/cooling fitting method to seal the rear end portion of the space part 21a.

In this way, when time elapses after the cap 23 is coupled to the rear end portion of the space part 21a, the adhesive is cured, and the reinforcing bar 22 is reinforced and the reinforcing bar 22 is fixed to the inside of the space part 21a at the same time by the adhesive cured in this way.

In the carbon composite material shaft 20 manufactured and completed in this way, since the reinforcing bar 22 is fixed to the inside of the space part 21a by the adhesive, the carbon composite material shaft 20 not only obtains a weight reduction effect of 20 to 25% or more compared to the conventional shaft 20 entirely made of a metal material, but also has improved strength and elasticity and has appropriate thermal variation characteristics at the same time.

Although, in this invention, when manufacturing the carbon composite material shaft 20, the reinforcing rod 22 is inserted into the space part 21a of the shaft main body 21, and then the adhesive is injected into the space part 21a using an injector 33, but it is not limited to this. Depending on the type of the adhesive used, it goes without saying that after applying an adhesive to the outer circumferential surface and rear end of the reinforcing rod 22 of the shaft main body 21, the reinforcing rod 22 with the adhesive can be inserted into the space 21a of the shaft main body 21.

Further, in addition to the carbon composite material shaft 20 inserted into the housing 10, the support cylinder part 11 of the housing 10 includes an inner cylinder body 11a made of a metal material and the outer cylinder body 11b made of a carbon composite material coupled to the outer side of the inner cylinder body 11a so that the carbon composite material motor spindle can improve the strength of the housing 10 and the thermal variation characteristics of the housing 10 while reducing the weight of the housing 10.

Although this invention has been described above with reference to the drawings, those skilled in the art can variously implement modification and variation of this invention without departing from the spirit and scope of this invention described in the claims described below. Therefore, if the varied implementation basically includes the elements of the claims of this invention, all of them should be considered to be included in the technical scope of this invention.

## Claims

1. A carbon composite material shaft comprising:
a shaft main body (21) composed of a rod shape made of a metal material and having a space part (21a) formed therein; and
a reinforcing bar (22) made of a carbon composite material inserted and fixed into the space part (21a) of the shaft main body (21),
wherein the reinforcing bar (22) is fixed to the inside of the space part (21a) by an adhesive.

2. The carbon composite material shaft of claim 1, wherein the reinforcing bar (22) is configured by winding a carbon fiber (22b) around the circumferential surface of a shaft member (22a) made of a carbon material.

3. The carbon composite material shaft of claim 2, wherein the shaft member (22a) made of a carbon material of the reinforcing bar (22) is a sealed core material or a core material in which a hollow is formed in the longitudinal direction of the shaft.

4. The carbon composite material shaft of claim 1, wherein the reinforcing bar (22) and the shaft main body (21) have an insulating material (22d) further provided on the contact surface therebetween, and
the insulating material (22d) is separately provided on the inner circumferential surface of the space part (21a) of the shaft main body (21) or formed by applying an insulating material to the inner circumferential surface of the space part (21a) of the shaft main body (21), or is separately provided on the outer circumferential surface of the reinforcing bar (22) or formed by coating an insulating material on the carbon fiber (22b) wound around the shaft member (22a) of the reinforcing bar (22), or is formed by alternately stacking the carbon fiber (22b) and the insulating material wound around the shaft member (22a) of the reinforcing bar (22).

5. The carbon composite material shaft of claim 1, wherein the space part (21a) formed in the shaft main body (21) is configured so that the front end portion thereof is closed and the rear end portion thereof is opened, a communication hole (21b) connected to the space part (21a) is formed in the central portion of the front end portion of the shaft main body (21), and a cap (23) is coupled to the rear end portion of the space part (21a).

6. The carbon composite material shaft of claim 1, wherein the space part (21a) has a ring-shaped concave groove (24) formed on the inner circumferential surface of the rear end portion thereof to correspond to the position of the rear end portion of the reinforcing bar (22) so that, when the adhesive is injected into the space part (21a), the adhesive is configured to be temporarily stored inside the concave groove (24).

7. The carbon composite material shaft of claim 1, wherein the carbon composite material shaft is manufactured through the steps of inserting the reinforcing bar (22) into the space part (21a) of the shaft main body (21), injecting the adhesive into the space part (21a) so that the adhesive permeates the reinforcing bar (22), thereby hardening the reinforcing bar (22) and, at the same time, fixing the reinforcing bar (22) to the inside of the space part (21a), and discharging an extra adhesive to the outside of the space part (21a) through the communication hole (21b), and coupling the cap (23) to the rear end portion of the space part (21a).

8. A carbon composite material motor spindle comprising:
a housing (10) configured by including a support cylinder part (11) extending in the front and rear direction and front cover members (12) and rear cover members (13) coupled to front and rear ends of the support cylinder part (11), respectively;
a carbon composite material shaft (20) which is rotatably provided inside the housing (10) and of which one end is provided to extend to the outside of the housing (10); and
a rotor (31) and a stator (32) which are provided on the outer circumferential surface of the carbon composite material shaft (20) and the inner circumferential surface of the housing (10),
wherein the support cylinder part (11) of the housing (10) is composed of an inner cylinder body (11a) made of a metal material and an outer cylinder body (11b) made of a carbon composite material coupled to the outer side of the inner cylinder body (11a),
wherein the carbon composite material shaft (20) is configured by including a shaft main body (21) made of a metal material having a space part (21a) formed therein, and a reinforcing bar (22) made of a carbon composite material inserted and fixed into the space part (21a) of the shaft main body (21).

9. The carbon composite material motor spindle of claim 8, wherein the outer cylinder body (11b) is configured by winding a carbon fiber around the outer circumferential surface of the inner cylinder body (11a) and then impregnating and curing the carbon fiber with an adhesive.

10. The carbon composite material motor spindle of claim 8, wherein the reinforcing bar (22) of the carbon composite material shaft (20) is fixed to the inside of the space part (21a) by the adhesive.

11. The carbon composite material motor spindle of claim 8, wherein the reinforcing bar (22) of the carbon composite material shaft (20) is configured by winding a carbon fiber (22b) around the circumferential surface of the shaft member (22a) made of a carbon material.

12. The carbon composite material motor spindle of claim 8, wherein the shaft member (22a) made of a carbon material of the reinforcing bar (22) of the carbon composite material shaft (20) is a sealed core material or a core material in which a hollow is formed in the longitudinal direction of the shaft.

13. The carbon composite material motor spindle of claim 8, wherein the reinforcing bar (22) and the shaft main body (21) of the carbon composite material shaft (20) have an insulating material (22d) further provided on a contact surface therebetween, and
the insulating material (22d) is separately provided on the inner circumferential surface of the space part (21a) of the shaft main body (21) or formed by applying an insulating material to the inner circumferential surface of the space part (21a) of the shaft main body (21), or is separately provided on the outer circumferential surface of the reinforcing bar (22) or formed by coating an insulating material on the carbon fiber (22b) wound around the shaft member (22a) of the reinforcing bar (22), or is formed by alternately stacking the carbon fiber (22b) and the insulating material wound around the shaft member (22a) of the reinforcing bar (22).

14. The carbon composite material motor spindle of claim 8, wherein the space part (21a) formed in the shaft main body (21) of the carbon composite material shaft (20) is configured such that the front end portion is closed and the rear end portion is opened, a communication hole (21b) connected to the space part (21a) is formed in the central portion of the front end portion of the shaft main body (21), and a cap (23) is coupled to the rear end portion of the space part (21a), and
a ring-shaped concave groove (24) is formed on the inner circumferential surface of the rear end portion of the space part (21a) to correspond to the position of the rear end portion of the reinforcing bar (22) so that, when the adhesive is injected into the space part (21a), the adhesive is configured to be temporarily stored inside the concave groove (24).

15. The carbon composite material motor spindle of claim 8, wherein the carbon composite material shaft (20) is manufactured through the steps of inserting the reinforcing bar (22) into the space part (21a) of the shaft main body (21), injecting the adhesive into the space part (21a) so that the adhesive permeates the reinforcing bar (22), thereby hardening the reinforcing bar (22) and, at the same time, fixing the reinforcing bar (22) to the inside of the space part (21a), and discharging an extra adhesive to the outside of the space part (21a) through the communication hole (21b), and coupling the cap (23) to the rear end portion of the space part (21a).
